# EUROPÄISCHE PATENTSCHRIFT

(11) **EP 0 525 348 B1**
(45) Veröffentlichungstag und Bekanntmachung des Hinweises auf die Patenterteilung: **19.10.1994**
(21) Anmeldenummer: 92110006.1
(22) Anmeldetag: 13.06.1992
(51) Int. Cl.: E03F 5/14, B01D 21/24

(54) **Langsandfang zum Abscheiden und Entfernen von Sand aus Zulaufgerinnen, insbesondere von Kläranlagen**
Sandcollector for separating and removing sand from a gully, particularly from a wastewater purification plant
Trappe à sable pour séparer et extraire du sable d'une rigole, en particulier d'une station d'épuration

(30) Priorität: 28.06.1991 DE 4121393
(43) Veröffentlichungstag der Anmeldung: 03.02.1993
(62) Teilanmeldung aus: 92119934.5
(73) Patentinhaber: Huber, Hans Georg, D-92334 Berching (DE)
(72) Erfinder: Huber, Hans Georg, D-92334 Berching (DE)
(74) Vertreter: Rehberg, Elmar, Dipl.-Ing.

(56) Entgegenhaltungen:
- EP-A- 0 389 789
- DE-A- 2 832 277
- DE-A- 3 941 673

## Beschreibung

Die Erfindung bezieht sich auf einen Langsandfang zum Abscheiden und Entfernen von Sand aus Zulaufgerinnen, insbesondere von Kläranlagen, mit einer insbesondere trapezförmigen Querschnitt aufweisenden und als gerade Strecke verlaufenden Absetzrinne, im Bereich deren Sohle in einem Sammelraum für den Sand eine entgegen der Fließrichtung im Zulaufgerinne arbeitende Transportfördereinrichtung vorgesehen ist, und mit einer Klassierfördereinrichtung, die den von der Transportfördereinrichtung übergebenen Sand schräg aufwärts austrägt. Unter einem Langsandfang wird ein Flachsandfang verstanden, der im wesentlichen horizontal als gerade Strecke durchströmt wird. Während der Durchströmung dieser Strecke hat der im Wasser enthaltene bzw. mitgeführte Sand Gelegenheit, in Richtung der Sohle der Absetzrinne abzusinken und in einen dort gebildeten Sammelraum überzutreten. Aus diesem Sammelraum wird der Sand dann entfernt, beispielsweise mit einer Transportfördereinrichtung, die oft als Förderschnecke ausgebildet ist.

Unter Sand wird Material verstanden, welches eine Korngröße > 0,2 mm Durchmesser aufweist. Der Sand soll möglichst ohne anhängende organische Bestandteile abgeschieden werden. Der Sandfang dient somit auch dazu, den Sand von dem Klärschlamm zu trennen. Insoweit ist die Arbeitsrichtung der Transportfördereinrichtung entgegen der Fließrichtung im Zulaufgerinne wichtig. Der Langsandfang dient hier im Bereich der Transportfördereinrichtung auch zum Auswaschen des Sands.

Ein Langsandfang der eingangs beschriebenen Art ist bekannt. Er weist einen trapezförmigen oder trapezartigen Querschnitt auf, der asymmetrisch ausgebildet ist und nur eine schräggestellte Wandung besitzt. Die Transportfördereinrichtung ist im Sammelraum an der tiefsten Stelle der Absetzrinne angeordnet, also hier exzentrisch zur Längsmittelebene im Bereich der durchgehend vertikalen Wandung des Gerinnes. Zu diesem Langsandfang gehört eine Klassierfördereinrichtung, die den von der Transportfördereinrichtung übergebenen Sand schräg aufwärts austrägt. Die Klassierfördereinrichtung muß tiefer beginnen als die Transportfördereinrichtung, damit sie den übergebenen Sand aufnehmen und austragen kann. Es ist bekannt, die Klassierfördereinrichtung gleichsam neben der vertikalen Wandung und damit außerhalb des eigentlichen Querschnitts der Absetzrinne anzuordnen. Hierdurch erhöht sich der Bauaufwand entsprechend. Es ist auch bekannt, die Transportfördereinrichtung exzentrisch zur Längsmittelebene des Querschnitts der Absetzrinne, jedoch nicht an der tiefsten Stelle, anzuordnen und die Klassierfördereinrichtung an der tiefsten Stelle, also unmittelbar benachbart zu der vertikalen Wandung, vorzusehen. In diesem Fall sind dann sowohl die Transportfördereinrichtung wie auch die Klassierfördereinrichtung exzentrisch zur Längsmittelebene angeordnet.

Schließlich ist es bekannt, den Querschnitt der Absetzrinne symmetrisch zur Längsmittelebene auszubilden, also zwei abgeschrägte Wandungen zu bilden, so daß die tiefste Stelle und damit der Sammelraum für den Sand in der Längsmittelebene der Absetzrinne angeordnet werden kann. Durch diese Anordnung steht die Längsmittelebene für die Anordnung der Klassierfördereinrichtung nicht mehr zur Verfügung. Die Klassierfördereinrichtung wird damit exzentrisch zur Längsmittelebene vorgesehen.

Bei diesen bekannten Langsandfängen wird zwar vorteilhaft so gearbeitet, daß die Transportfördereinrichtung entgegen der Fließrichtung im Zulaufgerinne arbeitet und damit den Sand von organischen Bestandteilen vorteilhaft auswäscht. Es ergeben sich jedoch infolge der aufgezeigten Anordnungen erhöhte Kosten für die Ausbildung der Wandung der Absetzrinne und der Unterbringung der Einzelteile. In allen Fällen ist die Klassierfördereinrichtung exzentrisch zur Längsmittelebene vorgesehen, so daß der Sandabwurf nur nach einer Seite möglich ist, und zwar nach der Seite, nach der auch die Klassierfördereinrichtung relativ zur Längsmittelebene exzentrisch verschoben ist. Da es jedoch in Kläranlagen, je nach den Bauverhältnissen, erforderlich ist, den Sand einmal nach links und einmal nach rechts abzuwerfen, ergibt sich die Notwendigkeit, die Langsandfänge einmal in Linksausführung und einmal in Rechtsausführung bauen zu müssen, wobei die eine Ausführung das Spiegelbild der anderen Ausführung ist. Dies verteuert die Herstellung.

Aus der DE-PS 28 32 277 ist eine Vorrichtung zur Behandlung von Abwässern bekannt, die auch einen Langsandfang besitzt, bei dem die Transportfördereinrichtung für den Sand im Sammelraum und die Klassierfördereinrichtung zum Austragen des Sands schräg nach oben in der Längsmittelebene des Querschnitts des Gerinnes angeordnet sind. Dabei arbeitet jedoch die Transportfördereinrichtung in Fließrichtung und die Klassierfördereinrichtung ist der Absetzrinne nachgeschaltet, so daß sich eine erhebliche Baulänge ergibt. Auch findet, bedingt durch die Arbeitsrichtung der Transportfördereinrichtung, kein Auswaschen des Sands statt, sondern der Sand und die organischen Bestandteile werden gemeinsam ausgetragen.

Aus der DE-PS 30 28 541 ist eine Vorrichtung zum Entfernen von Rechengut einerseits und Sand andererseits aus Zulaufgerinnen, insbesondere von Kläranlagen, bekannt. An der Welle des Rechens ist ein Sandschöpfrad relativ großen Durchmessers befestigt, welches den Sand von der Transportfördereinrichtung übernimmt und einer Klassierfördereinrichtung zuführt, die mit paralleler Achse zu der Achse des Rechens angeordnet ist. Es ist ein gemeinsamer Antrieb für den Rechen, das Sandschöpfrad, die Transportfördereinrichtung und die Klassierfördereinrichtung vorgesehen. Durch das zusätzlich erforderliche Sandschöpfrad mit großem Durchmesser verteuert sich die Gesamtanlage erheblich. Auch die Gesamtbaulänge ist der Vorrichtung ist relativ groß. Die Transportfördereinrichtung im Sammelraum für Sand arbeitet unvorteilhaft in Fließrichtung.

Der Erfindung liegt die Aufgabe zugrunde, einen Langsandfang der eingangs beschriebenen Art so weiterzubilden, daß eine einheitliche Bauart entsteht, mit der der Abwurf des Sands wahlweise nach links oder rechts erfolgen kann, so daß sich die Herstellung spiegelbildlicher Ausführungen erübrigt.

Erfindungsgemäß wird dies bei dem Langsandfang der eingangs beschriebenen Art dadurch erreicht, daß die Klassierfördereinrichtung in der Längsmittelebene der Absetzrinne angeordnet ist und eine wahlweise links/rechts benutzbare Abwurfschurre aufweist. Diese Gestaltung kann bei asymmetrischem oder symmetrischem Querschnittsaufbau der Absetzrinne verwirklicht werden. Die Klassierfördereinrichtung stellt den tiefsten Punkt dar und übernimmt den Sand von der Transportfördereinrichtung, die ihrerseits exzentrisch zur Längsmittelebene angeordnet ist. Das Gehäuse der Absetzrinne wird durch die erfindungsgemäße Anordnung der Klassierfördereinrichtung vergleichsweise wenig beeinträchtigt. Es muß nur im Bereich der Sohle an der Durchdringungsstelle entsprechend abgestimmt werden. Es entfällt die Links-/Rechtsausführung und die eine Ausbildung kann für beide Fälle benutzt werden, wobei es lediglich erforderlich ist, die Abwurfschurre nach der einen oder anderen Richtung weisend am oberen Ende der Klassierfördereinrichtung anzusetzen. Dies kann durch einfaches Umstecken erfolgen. Die Länge der Klassierfördereinrichtung wird durch diese Ausbildung nicht vergrößert, weil sich gleich weite Wege im Bereich der Abwurfschurre ergeben. Weiterhin ist vorteilhaft, daß der tiefste Punkt der Klassierfördereinrichtung etwa am Anfang der Absetzrinne angeordnet ist, da die Transportfördereinrichtung entgegen der Fließrichtung im Gerinne arbeitet. Damit wird die Länge der Absetzrinne gleichzeitig dazu benutzt, um die schräg angeordnete Klassierfördereinrichtung innerhalb dieser Länge unterzubringen, wodurch sich die Gesamtbaulänge nicht vergrößert.

Die Klassierfördereinrichtung kann eine in einem rohrförmigen Gehäuse umlaufend angetriebene Förderschnecke aufweisen. Eine solche Bauweise der Klassierfördereinrichtung ist zwar bereits im Stand der Technik bekannt, jedoch ergibt sich durch diese Ausbildung eine besonders einfache Unterbringungsmöglichkeit in der Absetzrinne.

Besonders vorteilhaft ist es, wenn die eine Förderschnecke aufweisende Klassierfördereinrichtung mit einer Einrichtung zum Abscheiden von Rechengut baulich vereinigt ist. Dabei geht es nicht nur darum, einen gemeinsamen Antrieb für die einzelnen Teile vorzusehen, sondern eine Integration zu erreichen, bei der Teile der einen Einrichtung Funktionen der anderen Einrichtung mit übernehmen. Dabei kann die Einrichtung zum Abscheiden von Rechengut ein rohrartiges Gehäuse und eine Förderschnecke aufweisen, wobei das rohrartige Gehäuse in seinem in die Absetzrinne eintauchenden Teil einseitig offen und auf der anderen Seite mit einem Sieb, Rost o. dgl. ausgestattet ist, während der übrige Teil des Gehäuses im wesentlichen mit geschlossener Wandung versehen ist; die Förderschnecke der Klassierfördereinrichtung ist dabei mit der Förderschnecke der Einrichtung zum Abscheiden von Rechengut antriebsmäßig und baulich verbunden, wobei die Förderschnecke der Einrichtung zum Abscheiden im Bereich des Siebs, Rosts o. dgl. wellenlos und von der Förderschnecke der Klassierfördereinrichtung durch eine rohrartige Wandung getrennt ausgebildet ist. Dies vereinfacht den baulichen Aufwand ganz erheblich. Nicht nur das im Stand der Technik bekannte Sandschöpfrad kommt in Fortfall, sondern die Klassierfördereinrichtung wird mit fluchtender Achse zu der Einrichtung zum Abscheiden von Rechengut angeordnet, wobei die Förderschnecke der Einrichtung zum Abscheiden von Rechengut zumindest zum größeren Teil auch gleichzeitig die Förderschnecke der Klassierfördereinrichtung darstellt. Nur im unteren Bereich sind die Einrichtungen voneinander getrennt, d. h. innerhalb und außerhalb der rohrförmigen Wandung angeordnet. Über die eine Einrichtung wird der Sand schräg aufwärts gefördert. Mit der anderen Einrichtung wird das Rechengut abgeschieden und aufwärts gefördert. Sand und Rechengut werden zusammengeführt, durch eine Kompaktierzone gedrückt und gemeinsam abgeworfen. Auch dabei ist nur eine Ausbildung für wahlweisen Links/Rechts-Abwurf erforderlich.

Die Förderschnecke der Einrichtung zum Abscheiden von Rechengut und die Förderschnecke der Klassierfördereinrichtung sind in einem Bereich oberhalb des Siebs, Rosts o. dgl. aneinander angeschlossen, indem das rohrartige Gehäuse geschlossen ausgebildet ist. Die Baulänge der Klassierfördereinrichtung wird damit erheblich kürzer.

Die rohrartige Wandung zwischen den beiden Förderschnecken ist am unteren Ende im Bereich der Sohle der Absetzrinne ortsfest gelagert. Sie ragt nach oben zwischen die beiden einander ringförmig umgebenden Förderschnecken hinein und endet an der Zusammenführungsstelle offen. An dieser Stelle wird nicht nur das Rechengut, sondern auch der Sand von der Förderschnecke der Einrichtung zum Abscheiden von Rechengut übernommen.

Die Absetzrinne kann im wesentlichen nur eine schrägstehende Wandung aufweisen und der Sammelraum für Sand und die darin angeordnete Transportfördereinrichtung können exzentrisch zur Längsmittelebene angeordnet sein. Dies ergibt eine besonders günstige Ausbildung für das Verhältnis der zu behandelnden Abwassermengen bei Regenwetter und bei Trockenwetter. Die Erfindung ist aber auch dann einzusetzen, wenn die Absetzrinne eine symmetrische Ausbildung mit zwei schrägstehenden Wandungsteilen aufweist.

Die Klassierfördereinrichtung ist am Anfang des Langsandfangs an die Transportfördereinrichtung angeschlossen, so daß die Baulänge der Absetzrinne für die Unterbringung der Klassierfördereinrichtung genutzt wird.

Die Einrichtung zum Abscheiden von Rechengut kann eine Siebschnecke sein. Das Sieb kann je nach Anforderungen in verschiedenen Spaltweiten ausgebildet werden. Die Klassierfördereinrichtung wird hiervon nicht berührt.

Die Siebschnecke kann eine Preßzone für die Verdichtung des Rechenguts und des Sands aufweisen. Diese Preßzone ist oberhalb der Zusammenführung des Rechenguts und des Sands angeordnet und besteht im wesentlichen aus einer Querschnittsverengung im Bereich der Förderschnecke.

Die Erfindung wird anhand zweier Ausführungsbeispiele weiter erläutert und beschrieben. Es zeigen:
- Figur 1: einen Querschnitt durch den Langsandförderer und dessen Absetzrinne mit der grundsätzlichen Anordnung der für die Erfindung wesentlichen Teile und
- Figur 2: einen Schnitt in der Längsmittelebene einer zweiten Ausführungsform des Langsandfangs mit Integration der Einrichtungen zum Abscheiden von Rechengut einerseits und Sand andererseits.

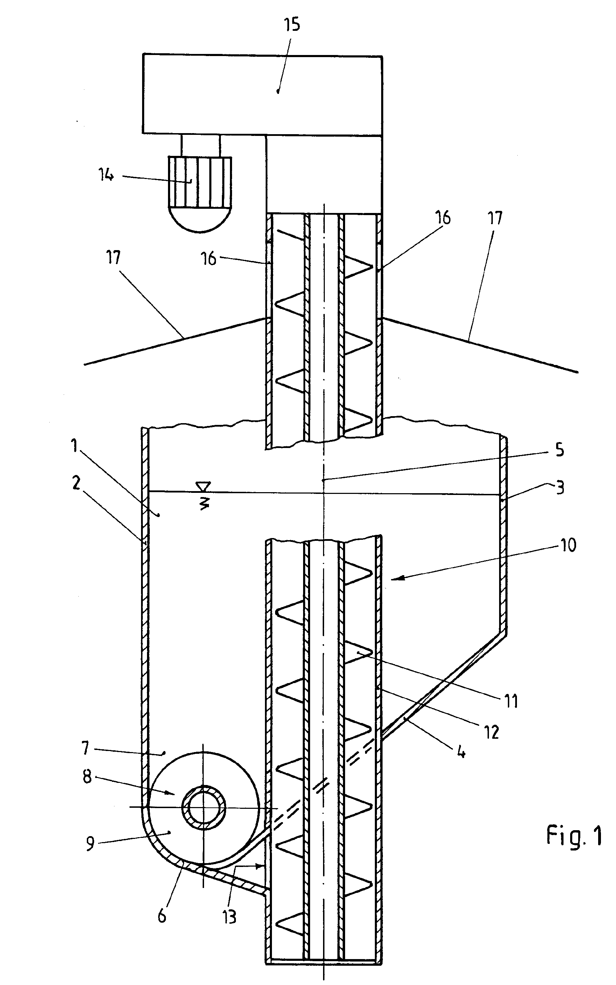

In Figur 1 ist ein Querschnitt durch eine Absetzrinne 1 gezeigt. Die Absetzrinne 1 weist vertikale Wandungen 2 und 3 und eine schrägstehende Wandung 4 auf. Die Absetzrinne 1 besitzt damit trapezförmigen oder trapezartigen Querschnitt, der jedoch asymmetrisch zu ihrer Längsmittelebene 5 ausgebildet ist. Im Bereich der Sohle 6, also an der tiefsten Stelle der Absetzrinne 1, ist ein Sammelraum 7 für Sand gebildet, in welchem eine Transportfördereinrichtung 8, hier in Form einer Förderschnecke, untergebracht ist. Die Transportfördereinrichtung 8 kann auch als Kratzerband o. dgl. ausgebildet sein. Ein Teil der Wandungen 2, 4 bildet gleichsam das Gehäuse für die Förderschnecke 9 der Transportfördereinrichtung 8. Die Transportfördereinrichtung 8 ist exzentrisch zur Längsmittelebene 5 vorgesehen.

In der Längsmittelebene 5 ist eine Klassierfordereinrichtung 10 angeordnet, die eine Förderschnecke 11 aufweist und mit einem rohrartigen Gehäuse 12, welches die Förderschnecke 11 umgibt, die schräge Wandung 4 durchdringt und insoweit tiefer endet, als es der Anordnung der Transportfördereinrichtung 8 entspricht. Die Klassierfördereinrichtung 10 ist schrägstehend nach aufwärts geneigt in Fließrichtung in der Absetzrinne 1 angeordnet und vergrößert ihre Baulänge damit nicht. Die Transportfördereinrichtung 8 arbeitet entgegen der Fließrichtung, so daß sich die tiefste Stelle der Klassierfördereinrichtung 10 am Anfang der Äbsetzrinne befindet. Über die Länge der Absetzrinne hat der Sand Gelegenheit, sich abzusetzen und in den Bereich der Transportfördereinrichtung 4 zu gelangen. Von der Förderschnecke 9 wird er entgegengesetzt der Fließrichtung transportiert und dabei ausgewaschen. Über eine Durchbrechung 13 im Gehäuse 12 tritt der Sand in die Klassierfördereinrichtung 10 ein und wird vermittels der angetriebenen Förderschnecke 11 aufwärts gefördert. Zum Antrieb der Förderschnecke 11 dient ein Motor 14 mit nachgeschaltetem Getriebe 15, die am oberen Ende der Klassierfördereinrichtung 10 aufgesetzt sind. In diesem oberen Endbereich weist das Gehäuse 12 auch zwei wahlweise benutzbare und verschließbare Öffnungen 16 auf, an denen wahlweise eine Abwurfschurre 17 angesetzt werden kann, um den von der Klassierfördereinrichtung 10 ausgetragenen Sand entweder nach links oder nach rechts abzuwerfen. Der Langsandfang ist damit gleichermaßen für Rechts- und Linksabwurf geeignet. Die Absetzrinne 1 mit ihren Wandungen 2, 3, 4 kann aus Metallblech, insbesondere Edelstahl, ausgebildet sein und einen oberirdisch anzuordnenden Trog bilden. Es ist aber auch möglich, die Absetzrinne 1 als Teil eines Betonbauwerks auszubilden.

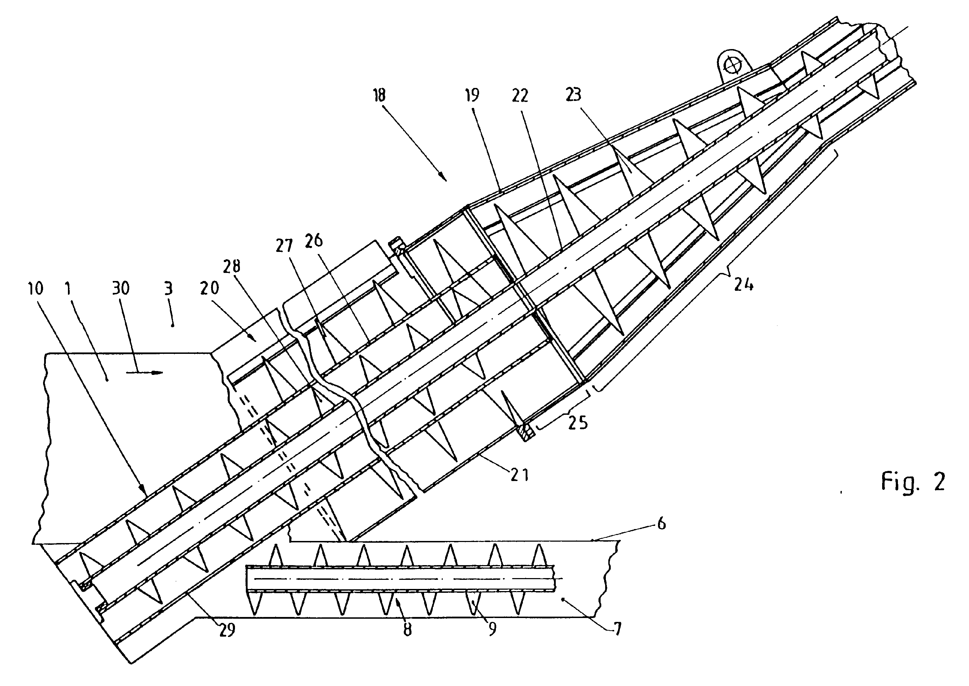

In Figur 2 ist eine zweite Ausführungsform des Langsandfangs dargestellt, der hier mit einer Vorrichtung zum Entfernen von Rechengut baulich vereinigt ist. Auch hier ist eine Absetzrinne 1 vorgesehen, die zu ihrer Längsmittelebene, die hier die Zeichenebene bildet, symmetrisch oder asymmetrisch ausgebildet sein kann. Im Bereich der Sohle 6 ist der Sammelraum 7 mit der Transportfördereinrichtung 8 vorgesehen. Die Transportfördereinrichtung 8 kann auch exzentrisch zu der Längsmittelebene 5 vorgesehen sein.

Es ist eine Einrichtung 18 zum Abscheiden von-Rechengut vorgesehen, die ein im wesentlichen rohrförmiges Gehäuse 19 aufweist, welches in wesentlichen Bereichen geschlossen ausgebildet ist, insbesondere in den Bereichen, in denen diese Einrichtung 18 den Wasserspiegel überragt. Im unteren Bereich dagegen ist eine Einflußöffnung 20 gebildet. Auf der anderen Seite ist ein Sieb, Rost o. dgl. 21 vorgesehen. Innerhalb des so gebildeten Gehäuses ist eine angetriebene Welle 22 gelagert, die auf ihrem Umfang eine Förderwendel 23 trägt. Im oberen und mittleren Bereich des Gehäuses 19 füllt die Förderwendel 23 den Raum zwischen Welle 22 und Gehäuse 19 aus. Es ist dort auch eine Preßzone 24 gebildet, in der abnehmender Querschnitt vorgesehen ist und somit eine Kompaktierung des geförderten Guts eintritt. Zwischen der Preßzone 24 und dem Sieb, Rost o. dgl. 21 ist eine geschlossene zylindrische Wandung 25 gebildet. Innerhalb dieses Bereichs der Wandung 25 endet eine rohrförmige Wandung 26, die ortsfest im Bereich der Sohle 6 der Absetzrinne 1 verankert ist. Die Förderwendel 23 setzt sich in diesem Bereich ringartig und ohne Befestigung zur Welle 22 fort und bildet hier einen Förderring 27 für Rechengut um die Wandung 26 herum. Die Welle 22 jedoch setzt sich auch im Innern der Wandung 26 fort und trägt hier eine Förderwendel 28, die zusammen mit der Welle 22 und der Wandung 26 einen Teil der Klassierfördereinrichtung 10 bildet. Die rohrartige Wandung 26 hat im unteren Bereich, der Transportfördereinrichtung 8 zugekehrt, eine Durchbrechung 29 für den Übertritt des Sands.

Am oberen Ende des Gehäuses 19, welches in Figur 2 nicht dargestellt ist, ist wiederum eine Antriebseinheit aus Motor und Getriebe aufgesetzt. Dort sind auch Öffnungen für die wahlweise links oder rechts zu benutzende Abwurfschurre 17 vorgesehen, wie dies anhand von Figur 1 verdeutlicht wurde.

Die Besonderheit der Ausführungsform gemäß Figur 2 besteht einmal darin, daß die Klassierfördereinrichtung 10 und die Einrichtung 18 zum Abscheiden von Rechengut baulich vereinigt sind und weiterhin über einen gemeinsamen Antrieb verfügen. Die fluchtende Achse ist in der Längsmittelebene 5 angeordnet. Die Transportfördervorrichtung 8 kann ebenfalls in der Längsmittelebene 5 angeordnet sein. Wenn sie seitlich versetzt angeordnet ist, reicht das Ende der Transportfördervorrichtung 8 der Fließrichtung gemäß Pfeil 30 entgegen weiter nach vorn.

Im Vergleich zu der Ausführungsform gemäß Figur 1 fällt auf, daß die Klassierfördereinrichtung 10 nur eine vergleichsweise kurze Länge aufweist. Der Sand, der sich über die Länge der Absetzrinne 1 abscheidet und von der Transportfördervorrichtung 8 entgegen der Fließrichtung gemäß Pfeil 30 an den Anfang der Absetzrinne zurückgefördert wird, gelangt durch die Durchbrechung 29 in den Bereich der Förderwendel 28 der Klassierfördereinrichtung 10 und wird in der rohrförmigen, ortsfesten Wandung 26 schräg nach aufwärts gefördert, bis er am freien Ende der Wandung 26 in den Bereich der Wandung 25 der Einrichtung 18 abgegeben wird, wo er von der Förderwendel 23 erfaßt wird, die auch das Rechengut fördert. Das Rechengut selbst scheidet sich auf der Innenseite des Siebs, Rosts o. dgl. 21 ab und wird von dem Förderring 27 gefördert, so daß es ebenfalls in den Bereich 25 gelangt. Bei dieser Ausführungsform stimmen die Achsen der Einrichtung 18 zum Abscheiden von Rechengut und der Klassierfördereinrichtung 10 überein. Die gemeinsame Achse ist in der Langsmittelebene 5 angeordnet, so daß sich gleich weite Abwurfwege am oberen, nicht dargestellten Ende der Einrichtung 18 zum Abscheiden von Rechengut, vermischt mit dem Sand, ergeben.

## Patentansprüche

1. Langsandfang zum Abscheiden und Entfernen von Sand aus Zulaufgerinnen, insbesondere von Kläranlagen, mit einer insbesondere trapezförmigen Querschnitt aufweisenden und als gerade Strecke verlaufenden Absetzrinne (1), im Bereich deren Sohle (6) in einem Sammelraum (7) für den Sand eine entgegen der Fließrichtung im Zulaufgerinne arbeitende Transportfördereinrichtung (8) vorgesehen ist, und mit einer Klassierfördereinrichtung (10), die den von der Transportfördereinrichtung (8) übergebenen Sand schräg aufwärts austrägt, dadurch gekennzeichnet, daß die Klassierfördereinrichtung (10) in der Längsmittelebene (3) der Absetzrinne (1) angeordnet ist und eine wahlweise links oder rechts benutzbare Abwurfschurre (17) aufweist.

2. Langsandfang nach Anspruch 1, dadurch gekennzeichnet, daß die Klassierfördereinrichtung (10) eine in einem rohrförmigen Gehäuse (12) umlaufend angetriebene Förderschnecke (11) aufweist.

3. Langsandfang nach Anspruch 1 und 2, dadurch gekennzeichnet, daß die eine Förderschnecke (12) aufweisende Klassierfördereinrichtung (10) mit einer Einrichtung (18) zum Abscheiden von Rechengut baulich vereinigt ist.

4. Langsandfang nach Anspruch 1 bis 3, dadurch gekennzeichnet, daß die Einrichtung (18) zum Abscheiden von Rechengut ein rohrförmiges Gehäuse (19) und eine Förderschnecke (3) aufweist, wobei das rohrförmige Gehäuse (19) in seinem in die Absetzrinne (1) eintauchenden Teil einseitig offen und auf der anderen Seite mit einem Sieb, Rost o. dgl. (21) ausgestattet ist, während der übrige Teil des Gehäuses (19) im wesentlichen mit geschlossener Wandung versehen ist, daß die Förderschnecke (28) der Klassierfördereinrichtung (10) mit der Förderschnecke (23) der Einrichtung (18) zum Abscheiden von Rechengut antriebsmäßig und baulich verbunden, die Förderschnecke (23) der Einrichtung (18) zum Abscheiden im Bereich des Siebs, Rosts o. dgl. (21) wellenlos und von der Förderschnecke der Klassierfördereinrichtung (10) durch eine rohrförmige Wandung (26) getrennt ausgebildet ist.

5. Langsandfang nach Anspruch 4, dadurch gekennzeichnet, daß die Förderschnecke (23) der Einrichtung (18) zum Abscheiden von Rechengut und die Förderschnecke (28) der Klassierfördereinrichtung (10) in einem Bereich (25) oberhalb des Siebs, Rosts o. dgl. (21) aneinander angeschlossen sind, indem das rohrartige Gehäuse (19) geschlossen ausgebildet ist.

6. Langsandfang nach Anspruch 4, dadurch gekennzeichnet, daß die rohrartige Wandung (26) zwischen den beiden Förderschnecken (27, 28) am unteren Ende im Bereich der Sohle (6) der Absetzrinne ortsfest gelagert ist.

7. Langsandfang nach einem oder mehreren der Ansprüche 1 bis 6, dadurch gekennzeichnet, daß die Absetzrinne (1) im wesentlichen nur eine schrägstehende Wandung (4) aufweist, und daß der Sammelraum (7) für Sand und die darin angeordnete Transportfördereinrichtung (8) exzentrisch zur Längsmittelebene (3) angeordnet sind.

8. Langsandfang nach einem oder mehreren der Ansprüche 1 bis 7, dadurch gekennzeichnet, daß die Klassierfördereinrichtung (10) am Anfang des Langsandfangs an die Transportfördereinrichtung (8) angeschlossen ist.

9. Langsandfang nach Anspruch 3, dadurch gekennzeichnet, daß die Einrichtng (18) zum Abscheiden von Rechengut eine Siebschnecke ist.

10. Langsandfang nach Anspruch 9, dadurch gekennzeichnet, daß die Siebschnecke eine Preßzone (24) für die Verdichtung des Rechenguts und des Sands aufweist.

## Claims

1. Longitudinal sand trap for separating and removing sand from inlet channels, in particular in clarification plants, having a settling channel (1), which has in particular a trapezoidal cross-section and extends as a straight section, and provided in the region of the bottom (6) of the settling channel in a collecting chamber (7) for the sand is a transportation conveying device (8) which operates in the opposite direction to the direction of the flow in the inlet channel, and having a separation conveying device (10) which discharges in a diagonal upwards direction the sand transferred by the transportation conveying device (8), characterised in that the separation conveying device (10) is disposed in the centre longitudinal plane (3) of the settling channel (1) and comprises a throw-out chute (17) which can be used to the left or to the right as desired.

2. Longitudinal sand trap according to claim 1, characterised in that the separation conveying device (10) comprises a conveyor worm (11) driven in such a manner as to rotate in a tubular housing (12).

3. Longitudinal sand trap according to claim 1 and 2, characterised in that the separation conveying device (10) comprising a conveyor worm (12) is structurally combined with a device (18) for separating out the screenings.

4. Longitudinal sand trap according to claims 1 to 3, characterised in that the device (18) for separating out the screenings comprises a tubular housing (19) and a conveyor worm (3), wherein the tubular housing (19) is open on one side in its part which is received by the settling channel (1) and on the other side is provided with a sieve, grating or similar (21), whereas the remaining part of the housing (19) is provided substantially with a closed wall, that the conveyor worm (28) of the separation conveying device (10) is drivingly and structurally connected to the conveyor worm (23) of the device (18) for separating out the screenings, the conveyor worm (23) of the device (18) for the separation process in the region of the sieve, grating or similar (21) is without a shaft and is separated from the conveyor worm of the separation conveying device (10) by a tubular wall (26).

5. Longitudinal sand trap according to claim 4, characterised in that the conveyor worm (23) of the invention (18) for separating out the screenings and the conveyor worm (28) of the separation conveying device (10) are connected to each other in a region (25) above the sieve, grating or similar (21), in that the tubular housing (19) is closed.

6. Longitudinal sand trap according to claim 4, characterised in that the tubular wall (26) between the two conveyor worms (27,28) is fixedly mounted at the lower end in the region of the bottom (6) of the settling channel.

7. Longitudinal sand trap according to one or more of the claims 1 to 6, characterised in that the settling channel (1) comprises substantially only one chamfered wall (4), and that the collecting chamber (7) for the sand and the transportation conveying device (8) disposed therein are disposed eccentric to the centre longitudinal plane (3).

8. Longitudinal sand trap according to one or more of the claims 1 to 7, characterised in that the separation conveying device (10) is connected at the commencement of the longitudinal sand trap to the transportation conveying device (8).

9. Longitudinal sand trap according to claim 3, characterised in that the device (18) for separating out the screenings is a sieve worm.

10. Longitudinal sand trap according to claim 9, characterised in that the sieve worm comprises a pressing region (24) for compressing the screenings and the sand.

## Revendications

1. Dessableur long pour la séparation et l'élimination du sable dans des canaux d'adduction, en particulier dans des installations de clarification, avec un canal de décantation (1) présentant en particulier une section transversale en forme de trapèze et s'étendant en ligne droite, dans la région du fond (6) duquel est prévu, dans un espace (7) de collecte du sable, un dispositif transporteur (8) travaillant en sens opposé au sens de l'écoulement dans le canal d'adduction, et avec un dispositif classificateur (10) qui évacue obliquement vers le haut le sable provenant du dispositif transporteur (8),
**caractérisé** en ce que le dispositif classificateur (10) est disposé dans le plan longitudinal médian (5) du canal de décantation (1) et présente une goulotte d'évacuation (17) utilisable, au choix, à gauche ou à droite.

2. Dessableur long selon la revendication 1, caractérisé en ce que le dispositif classificateur (10) présente une vis transporteuse (11) entraînée en rotation dans un boîtier tubulaire (12).

3. Dessableur long selon les revendications 1 et 2, caractérisé en ce que le dispositif classificateur (10) présentant une vis transporteuse (11) est réuni, par construction, avec un dispositif (18) de séparation des déchets.

4. Dessableur long selon les revendications 1 à 3, caractérisé en ce que le dispositif (18) de séparation des déchets présente un boîtier tubulaire (19) et une vis transporteuse (23), le boîtier tubulaire (19) étant ouvert d'un côté dans sa partie plongeant dans le canal de décantation (1) et étant équipé sur son autre côté d'un crible, d'une grille ou autre (21), tandis que la partie restante du boîtier (19) est munie pour l'essentiel d'une paroi fermée, en ce que la vis transporteuse (28) du dispositif classificateur (10) est reliée, pour son entraînement et par construction, à la vis transporteuse (23) du dispositif (18) de séparation des déchets dans la zone du crible ou de la grille ou autre (21) sans être reliée à un arbre, et est séparée de la vis transporteuse (28) du dispositif classificateur (10) par une paroi tubulaire (26).

5. Dessableur long selon la revendication 4, caractérisé en ce que la vis transporteuse (23) du dispositif (18) de séparation des déchets et la vis transporteuse (28) du dispositif classificateur (10) sont raccordées l'une à l'autre dans une zone (25) au-dessus du crible ou de la grille ou autre (21), tandis que le boîtier tubulaire (19) est fermé.

6. Dessableur long selon la revendication 4, caractérisé en ce que la paroi tubulaire (26) entre les deux vis transporteuses (27, 28) est montée à poste fixe par son extrémité inférieure dans la zone du fond (6) du canal de décantation.

7. Dessableur long selon une ou plusieurs des revendications 1 à 6, caractérisé en ce que le canal de décantation (1) présente essentiellement seulement une paroi oblique (4) et en ce que l'espace (7) de collecte du sable et le dispositif transporteur (8) disposé dans cet espace sont excentrés par rapport au plan longitudinal médian (5).

8. Dessableur long selon une ou plusieurs des revendications 1 à 7, caractérisé en ce que le dispositif classificateur (10) est raccordé au dispositif transporteur (8) au commencement du dessableur long.

9. Dessableur long selon la revendication 3, caractérisé en ce que le dispositif (18) de séparation des déchets est une vis filtrante.

10. Dessableur long selon la revendication 9, caractérisé en ce que la vis filtrante présente une zone de pressage (24) pour la compression des déchets et du sable.
